# FASCICULE DE BREVET EUROPEEN

(11) **EP 1 438 513 B1**
(45) Date de publication et mention de la délivrance du brevet: **01.03.2006**
(21) Numéro de dépôt: 02793154.2
(22) Date de dépôt: 27.09.2002
(51) Int. Cl.: F04D 29/28, F04D 29/02

(54) **VENTILATEUR POUR UN ALTERNATEUR**
LÜFTER FÜR WECHSELSTROMGENERATOR
ALTERNATOR FAN

(30) Priorité: 28.09.2001 FR 0112553
(43) Date de publication de la demande: 21.07.2004
(73) Titulaire: VALEO EQUIPEMENTS ELECTRIQUES MOTEUR, 94017 Creteil (FR)
(72) Inventeur: VASILESCU, Claudiu, F-75013 Paris (FR); ARRIGHI, Sébastien, F-78000 Versailles (FR)
(74) Mandataire: Gamonal, Didier
(86) Numéro de dépôt international: PCT/FR2002/003305
(87) Numéro de publication internationale: WO 2003/029658

(56) Documents cités:
- EP-A- 0 500 442
- FR-A- 2 741 912
- GB-A- 2 347 276
- US-A- 5 927 949

## Description

### Domaine de l'invention

L'invention concerne un ventilateur pour un alternateur, notamment de véhicule automobile. Ce ventilateur est destiné à être solidarisé en rotation au rotor de l'alternateur et comporte une partie formant flasque et une pluralité de pales de ventilation s'étendant à partir de ce dernier ; le ventilateur étant réalisé par moulage d'un matériau plastique sur un insert mécanique en un matériau mécaniquement plus résistant que la matière plastique, telle que du métal, qui forme la partie du ventilateur assurant la fixation sur le support.

### Etat de la technique

Des ventilateurs de ce type sont déjà connus et décris par exemple dans le brevet français N° 2 673 338 de la demanderesse qui corespond au prèambule de la revendication 1. Dans le ventilateur décrit dans ce brevet l'insert est en métal et disposé dans la partie formant flasque et sert pour la fixation des ventilateurs, notamment par soudure, au rotor. Etant donné que le ventilateur en plastique est moulé sur cet insert, avec ses pales de ventilation, il est possible de réaliser des ventilateurs ayant des pales dont le nombre, la configuration et la disposition peuvent être choisis en fonction de l'application du ventilateur et du rendement de refroidissement qu'il doit fournir.

Ces ventilateurs peuvent être utilisés dans des alternateurs d'un débit électrique élevé susceptible de produire des échauffements excessifs sous ventilation inefficace.

Ces ventilateurs connus ont cependant les inconvénients majeurs que leur fabrication est coûteuse en raison de la quantité importante de matière plastique nécessaire qui est chère, et que leur tenue mécanique est insuffisante, également due à la masse importante de matière plastique utilisée.

### Objet de l'invention

La présente invention a pour but de proposer un ventilateur du type défini plus haut, qui ne présente pas les inconvénients qui viennent d'être énoncés.

En vue de la réalisation de ce but, on prévoit selon l'invention un ventilateur, pour alternateur doté d'un rotor, destiné à être solidarisé en rotation au rotor de l'alternateur, du type comprenant une partie formant flasque et une pluralité de pales de ventilateur s'étendant à partir de ce dernier ; le ventilateur étant réalisé par moulage d'un matériau plastique sur un insert, qui constitue la partie du flasque du ventilateur, destinée à assurer sa fixation sur le rotor, dans lequel l'insert constitue une armature apte à supporter les contraintes mécaniques produites lors de la rotation du ventilateur, caractérisé en ce que l'insert comporte au moins une partie d'une pale du ventilateur, en sorte d'augmenter la tenue mécanique du ventilateur et d'obtenir un meilleur accrochage de la matière plastique.

Ainsi le ventilateur surmoulé présente une tenue mécanique renforcée grâce à l'insert, avantageusement métallique, qui comporte au moins une partie d'une pale et qui consolide la partie en plastique du ventilateur. De même le coût du ventilateur surmoulé est réduit car l'insert, du fait qu'il comporte au moins une partie d'une pale, occupe un espace relativement important et assure une bonne tenue mécanique en sorte que la quantité de plastique nécessaire pour l'obtention du ventilateur surmoulé devient moindre. En outre l'insert permet d'assurer la forme, la disposition et le nombre voulu de pales. Les pales peuvent être très rapprochées ou de forme complexe tout en étant robustes du fait que l'insert porte au moins une partie d'une pale du ventilateur ce qui permet d'obtenir un meilleur ancrage de la matière plastique sur l'insert et donc une plus grande homogénéité du ventilateur. Le ventilateur peut donc tourner à grandes vitesses, être de forte puissance, être peu bruyant et être monté dans un alternateur de véhicule automobile.

L'invention est avantageusement complétée par les différentes caractéristiques suivantes prises seules ou selon toutes leurs combinaisons techniquement possibles :
- l'insert s'étend sur au moins sensiblement l'étendue complète de la partie de flasque du ventilateur.
   Ainsi une bonne tenue mécanique du ventilateur est assurée avec une quantité de matière plastique réduite, le volume du flasque étant essentiellement occupé par l'insert.
- l'insert s'étend radialement sur au moins les deux tiers de la partie surmoulée du ventilateur.
   Ainsi la tenue mécanique de l'extrémité circonférentielle du ventilateur est assurée car cette partie du ventilateur non surmoulée reste très proche de l'extrémité de l'insert ce qui réduit fortement les contraintes mécaniques appliquées à cette partie externe du ventilateur lors de son fonctionnement en rotation.
- l'insert présente à sa périphérie externe un contour sensiblement circulaire.
- l'insert présente à sa périphérie externe un contour sous la forme de dents.
   - - le ventilateur comporte deux séries de pales, à savoir une première série de pales principales plus longues qu'une deuxième série de pales secondaires, dont au moins une est disposée entre deux pales principales ; ces pales secondaires faisant partie au moins partiellement de l'insert.
- les pales principales font partie au moins partiellement de l'insert.
   Ainsi, on peut avoir que les grandes pales en tôle et les petites pales en plastique.
- des pales d'une même série sont consécutives.
- l'insert est réalisé en tôle pliée sous forme d'un ventilateur comportant au moins une pale secondaire ou principale.
- le ventilateur est centrifuge, centripète, axial, axialo-centrifuge ou axialo-centripète.
- les pales ou les parties des pales qui ne font pas partie de l'insert sont obtenus par surmoulage d'une matière plastique sur l'insert.
- les pales surmoulées en plastique comportent au moins partiellement au moins une pale secondaire localisée entre deux pales principales.
- les surfaces de l'insert sont au moins partiellement recouvertes de la matière plastique.
- les pales secondaires sont au moins en partie recouvertes de matière plastique.
- au moins les parties de l'insert servant à la fixation du ventilateur sur son support sont dégagées de matière plastique.
- le ventilateur est un ventilateur axial comportant une partie de flasque, portant à sa périphérie externe une partie cylindrique, et des pales fixées sur la face extérieure de la partie cylindrique faisant au moins partie de l'insert ;
- le ventilateur est un ventilateur axial comportant une partie de flasque portant des pales et en ce que l'insert s'étend au moins sur l'étendu du flasque.
- l'insert métallique comporte au moins un évidemment pour augmenter la tenue mécanique du surmoulage.

### Brève description des dessins

L'invention sera mieux comprise, et d'autres buts, caractéristiques, détails et avantages de celle-ci apparaîtront plus clairement dans la description explicative qui va suivre faite en référence aux dessins schématisés annexés donnés uniquement à titre d'exemple illustrant un mode de réalisation de l'invention et dans lesquels :
- La figure 1 est une vue en coupe axiale d'un alternateur standard ;
- la figure 2 est une vue sur la face avant d'un ventilateur à deux séries de pales selon l'invention ;
- la figure 3 est une vue de la face arrière du ventilateur selon la figure 2 ;
- la figure 4 est une vue en coupe le long de la ligne III-III de la figure 3, les pales ayant été omises ;
- la figure 5 est une vue en perspective d'un autre ventilateur à deux séries de pales, susceptible d'être réalisé conformément à l'invention ;
- la figure 6 est une vue sur la face avant d'un autre mode de réalisation d'un ventilateur à deux séries de pales, selon l'invention ;
- la figure 7 est une vue de dessus de l'insert métallique utilisé dans le ventilateur selon la figure 6, avant le pliage des portions destinées à former les pales courtes ;
- la figure 8 est une vue de l'insert selon la figure 6, après la réalisation par pliage des pales courtes ;
- la figure 9 est une vue similaire à la figure 6 d'une autre version de réalisation du ventilateur selon la figure 6 ;
- la figure 10 est une vue en perspective d'un ventilateur axial selon l'invention.
- la figure 11 est une vue en perspective d'une autre version de réalisation d'un ventilateur axial.
- la figure 12 est une variante de la figure 3.
- la figure 13 est une autre variante de la figure 3.

### Exemples préférés de réalisation de l'invention

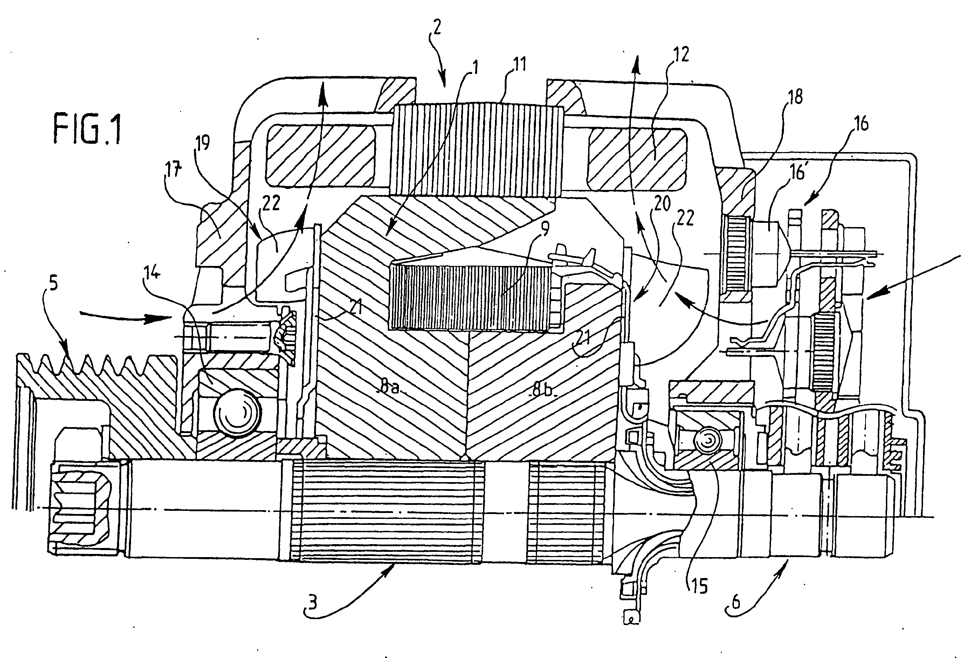

la figure 1 a seulement pour but de rappeler brièvement la structure générale d'un alternateur polyphasé à ventilation interne pour un moteur thermique de véhicule automobile, dans le but de placer l'invention dans son contexte d'utilisation préféré. Pour la compréhension de l'invention il suffit d'indiquer que l'alternateur représenté comporte essentiellement un rotor 1 entouré d'un stator 2 et monté solidaire en rotation sur un arbre de rotor 3, dont l'extrémité avant porte à rotation une poulie d'entraînement 5 et l'extrémité arrière des bagues collectrices (non référencées) appartenant à un collecteur 6. La poulie 5 est destinée à être reliée au moteur thermique du véhicule de manière connue par une transmission à courroie.

Le rotor 1 est ici du type à griffes et comporte deux roues polaires, désignées par les références 8a et 8b, présentant des dents d'orientation axiales décalées angulairement d'une roue à l'autre. Le numéro de référence 9 désigne le bobinage d'excitation du rotor monté entre les roues 8a, 8b. Concernant le stator il suffit d'indiquer qu'il comporte un corps 11 doté intérieurement d'encoches pour le passage de fils ou d'épingles des bobinages 12 du stator. Les bobinages 12 traversent le corps 11, constitué par un paquet de tôles, et s'étendent en saillie axiale de part et d'autre du corps 11 pour former un chignon avant et un chignon arrière (non référencés). Le nombre de bobinages 12 dépend des applications notamment du nombre de phases que comporte l'alternateur.

L'arbre de rotor 3 est supporté par des roulements à billes avant 14 et arrière 15 prévus dans des paliers respectivement avant 17 et arrière 18 ici ajourés pour circulation de l'air. Les paliers ont une forme creuse et sont conformés pour porter à leur périphérie externe le corps 11 du stator. Des tirants, visibles dans le document FR A 2 673 338 précités, relient entre eux les paliers 17, 18 constituant un carter destiné à être fixé sur une partie fixe du véhicule.

La référence 16 désigne le dispositif classique de redressement à diodes 16' du courant alternatif produit par la machine. Ce dispositif est porté ici par le palier arrière 18, qui porte également un régulateur de tension (non visible à la figure 1) et un porte-balais (représenté en partie à la figure 1). Les balais (non référencés), montés à coulissement dans le porte-balais, sont destinés à coopérer avec les bagues collectrices du collecteur 6. Ces bagues sont reliées par des liaisons filaires aux extrémités du bobinage d'excitation 9, tandis que les balais sont reliés au régulateur de tension qui, de manière connue en soi, pilote ainsi le bobinage d'excitation.

Il est important de noter que l'alternateur comporte des ventilateurs avant 19 et arrière 20 fixés en rotation sur les faces frontales respectivement de la roue polaire avant 8a et la roue polaire arrière 8b. Chaque ventilateur comporte une partie de flasque 21 appliqué et fixé sur la face frontale de la roue polaire de support et une pluralité de pales 22. Ces ventilateurs, qui s'étendent donc au voisinage du palier avant 17 et du palier arrière 18, ont pour fonction de créer une circulation d'un fluide de refroidissement, en l'espèce de l'air, pour refroidir les parties actives les plus chaudes de l'alternateur comme les diodes 16' du dispositif de redressement 16, les roulements 14, 15, le bobinage du rotor 1 et les bobinages 12 du stator, en passant à travers différentes ouvertures appropriées dans les paliers, de la manière illustrée par des flèches. Plus précisément chaque palier 17, 18 comporte centralement au voisinage du roulement associé 14, 15 des ouvertures d'entrée d'air en regard d'une partie des pales 22 et des ouvertures de sortie en regard du chignon concerné des bobinages 12. Les ventilateurs sont implantés en dessous des chignons des bobinages ; sachant que le ventilateur arrière 20 est plus puissant que le ventilateur avant car il doit refroidir le dispositif de redressement 16.

Il est évident que plus le débit électrique de l'alternateur augmente, plus la capacité de refroidissement des ventilateurs doit être élevée. Cette augmentation du débit électrique de la machine tournante est recherchée sans augmenter le volume de la machine. Cet objectif est atteint par une configuration appropriée des pales.

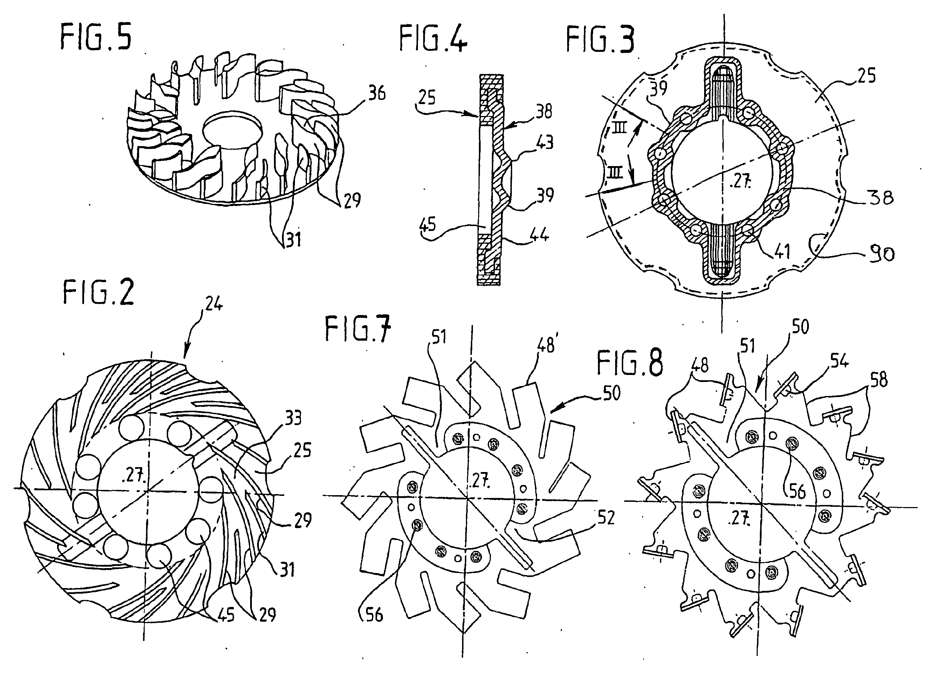

La figure 2 illustre un ventilateur qui est conçu à cette fin. Il porte la référence générale 24. Ce ventilateur comporte une partie de flasque sensiblement plane circulaire notée 25 qui est pourvue d'une ouverture centrale circulaire 27 pour le passage de l'arbre de l'alternateur, indiqué en 3 sur la figure 1, et deux séries de pales de ventilation saillantes axialement par rapport au flasque 25, à avoir une première série de pales principales longues 29 et une deuxième série de pales secondaires 31 plus courtes, disposées chacune entre deux pales longues 29. Cette disposition permet d'augmenter la puissance du ventilateur et réduit le risque de décollement de la veine d'air de refroidissement par rapport aux pales. En effet si l'air décolle des pales principales 29, les pales secondaires autoriseront un recollement de l'air sur les pales principales 29. Ainsi chaque pale secondaire 31 est disposée dans le canal de ventilation 33 ménagé entre les deux pales longues adjacentes 29 et qui s'évase en allant de la périphérie interne à la périphérie externe des pales. Le flasque 25 constitue le fond des canaux de ventilation.

Les pales secondaires 31 plus courtes que les pales 29, sont implantées radialement au-dessus de la périphérie interne des pales principales longues 29. Les pales 31 ont pour but de diminuer le bruit de la machine électrique tout en augmentant le débit et le rendement. L'implantation est faite de telle façon que la pale secondaire comprime le fluide de refroidissement afin que celui-ci soit en contact avec les pales principales 29. Les recirculations de l'air sont ainsi empêchées et l'écoulement de l'air est plus laminaire et s'effectue avec peu de frottements et de bruits. Cette disposition permet si besoin est de supprimer le ventilateur avant 19 en sorte que l'alternateur présente en variante un seul ventilateur.

Bien entendu, on pourrait aussi envisager différentes combinaisons de dispositions des pales secondaires 31 avec les pales principales longues 29. Ainsi, on pourrait disposer plusieurs pales secondaires 31 entre les pales principales 29. Le nombre de pales secondaires disposé entre les pales principales, au sein d'un même ventilateur peut être constant ou variable. Ainsi par exemple, pour un même ventilateur on peut insérer par exemple, quatre pales secondaires entre deux pales principales, puis trois pales secondaires entre deux autres pales principales ou toute autre combinaison. Egalement, on peut envisager d'avoir plusieurs pales principales 29 consécutives dépourvues de pales secondaires entre elles. La répartition des pales secondaires et principales est déterminée en fonction de la machine électrique à refroidir pour obtenir le meilleur refroidissement avec un bruit aérolique minimum.

Les pales principales 29 peuvent être réparties angulairement de façon régulière ou, comme dans le cas représenté sur la figure 2, de façon irrégulière. La disposition irrégulière permet de réduire davantage les bruits de fonctionnement des ventilateurs. Il en est de même des pales secondaires qui peuvent présenter une répartition angulaire irrégulière.

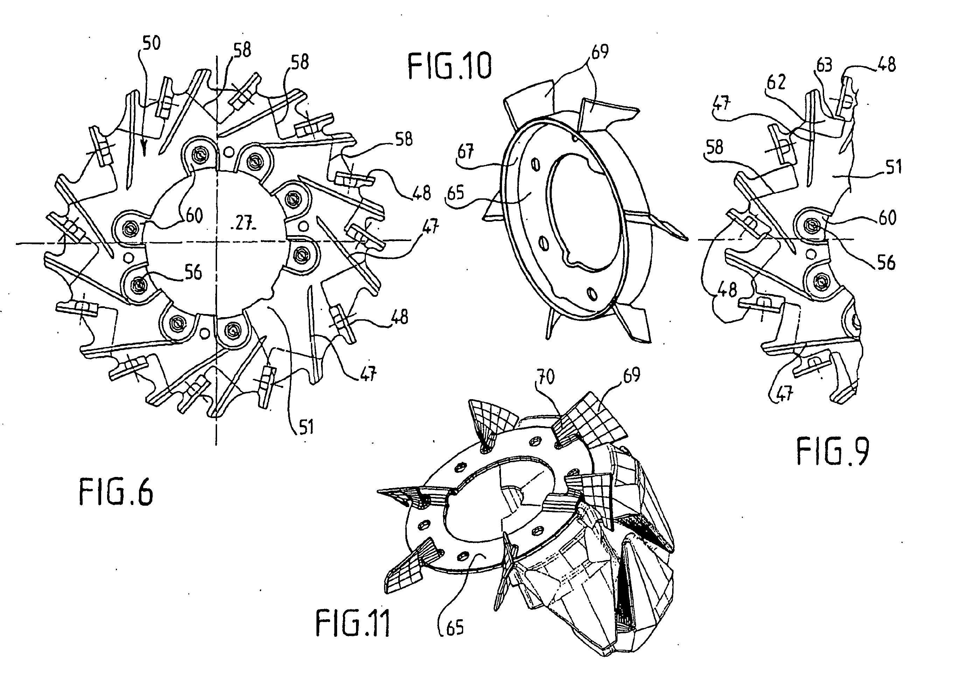

La figure 5 illustre en une vue en perspective un ventilateur du type selon la figure 2 où au moins certaines des pales principales 29 sont dotées, en surplomb par rapport au fond des canaux 33, d'une ailette 36 s'étendant de façon perpendiculaire ou inclinée par rapport aux pales 29, dans le but d'éviter une circulation secondaire du fluide au-dessus de ces pales.

Les ventilateurs de structure complexe tels que représentés sur les figures 2 et 5 peuvent bien entendu être réalisées par moulage en matière plastique. Mais comme expliqué plus haut, cette méthode de fabrication présente les inconvénients majeurs que les ventilateurs ont un prix de revient élevé et une tenue mécanique insuffisante.

Pour remédier à ces inconvénients il est proposé de doter les ventilateurs d'un insert en un matériau mécaniquement plus résistant que la matière plastique, avantageusement métallique.

L'insert s'étend sur une grande étendue de la matière plastique surmoulée sur cet insert.

L'insert métallique doit permettre au ventilateur de résister à des contraintes mécaniques produites lors de la rotation du ventilateur, telles que des contraintes de cisaillement, de vibration, de torsion, de flexion et d'élongation. Ces contraintes mécaniques produites lors de la rotation provoquent des déformations du ventilateur, essentiellement de la partie en plastique qui n'est pas surmoulée sur l'insert métallique. Ces déformations peuvent provoquer la rupture mécanique de la partie surmoulée du ventilateur.

L'insert doit donc avoir une géométrie permettant d'assurer parfaitement la tenue mécanique du ventilateur surmoulé tout en assurant un coût de revient relativement faible. L'insert doit permettre la réalisation de pales complexes, telles celles des figures 2 et 5, à un faible coût.

Dans un premier mode de réalisation, suivant une caractéristique, l'insert s'étend sur pratiquement toute l'étendue du flasque du ventilateur comme visible à la figure 3, de la matière plastique étant surmoulée sur cet insert. La ligne en pointillé portant la référence 90 montre la limite de l'insert.

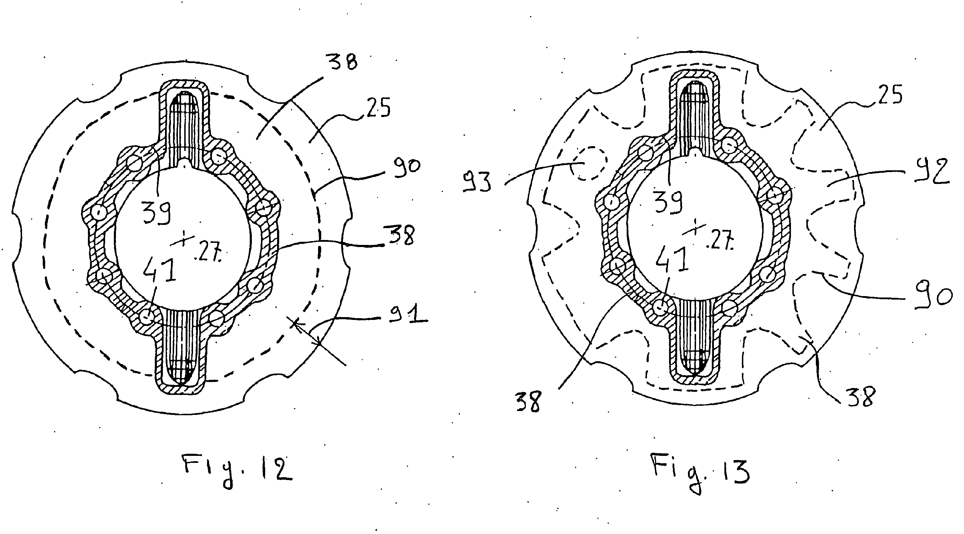

La figure 12 illustre un autre mode de réalisation de l'insert surmoulé dans lequel l'insert s'étend radialement sur au moins sur les deux tiers de la partie surmoulée. La partie restante non surmoulée du ventilateur qui se trouve à la périphérie externe présente ainsi une distance radiale 91 suffisamment faible pour résister aux contraintes mécaniques précédemment citées.

On peut également utiliser un insert métallique qui présente une limite périphérique externe non circulaire comme représenté aux figures 3 et 13. Ainsi, la figure 13 illustre un insert dont la limite périphérique externe et non circulaire et se présente par exemple sous la forme d'une roue dentée, ces dents 92 pouvant présenter une forme régulière ou non. La géométrie des dents doit être déterminer d'une manière à assurer la tenue mécanique du ventilateur lors de sa rotation à haute vitesse.

Egalement, l'insert métallique peut présenter des évidements 93 pour assurer une meilleure tenue mécanique du surmoulage ; la matière plastique traversant les évidements pour former des plots. Ces évidements 93 peuvent permettre de réduire encore le coût du ventilateur, en réalisant le surmoulage sur une seule face de l'insert métallique. Pour une bonne tenue mécanique, ces évidements dans lesquels est surmoulé le plastique doivent être localisés de manière à assurer une bonne tenue mécanique.

Comme on l'aura compris, la solution la plus économique est celle représentée dans les figures 3, 12 et 13, dans lesquelles l'insert occupe essentiellement toute la partie du flasque car c'est cette configuration qui consomme le moins de plastique ; le volume étant essentiellement occupé par l'insert métallique. Les autres configurations sont également économiques par rapport à l'état de la technique car pour assurer une bonne tenue mécanique, l'insert doit dans tous les cas occuper une surface minimum suffisamment grande, c'est à dire au moins supérieure à l'état de la technique.

Cependant, comme il ressort des figures 3, 12 et 13, l'insert est localement à nu, c'est-à-dire non recouvert par la matière plastique. La partie dénudée présente la forme d'une couronne indiquée en 39 sur la figure 3 et entourant l'ouverture centrale 27. La figure 4 montre donc un segment de cette couronne. On notera que cette partie dénudée présente deux protubérances diamétralement opposées (non référencées). Ces protubérances sont intérieurement creuses pour passage des liaisons filaires (non référencées) entre le bobinage d'excitation 9 et le collecteur 6 de la figure 1.

La couronne 39 permet la fixation du flasque 25 sur la face frontale extérieure de la roue polaire 8a ou 8b du rotor 1 de la machine électrique, par exemple par soudage. Les zones circulaires 41 qui sont réparties, de façon pratiquement angulairement équidistantes dans l'exemple représenté (ce qui n'est cependant pas obligatoire), sur la couronne constituent des points de soudage et correspondent à des déformations locales visibles en 43 sur la figure 4, en saillie de la face d'application de la couronne sur la roue polaire, toute la déformation constituant un point de soudage.

On constate que sur la face avant montrée sur la figure 2 des zones indiquées en 45 de l'insert qui sont nues sont prévues pour la fixation de l'insert sur le rotor. Elles correspondent aux zones de fonction 43 de la figure 4.

Dans le mode de réalisation, qui vient d'être décrit, l'insert constitue pratiquement toute la partie de flasque du ventilateur en conférant à celui-ci ainsi une bonne tenue mécanique.

Suivant une caractéristique lors de l'opération de surmoulage sur l'insert 38 on ne réalisera simultanément pas tout l'ensemble des pales telles celles représentées sur les figures 2 et 5.

Plus précisément suivant l'invention, comme mieux décrit dans les figues 6 à 11, l'insert comporte au moins une partie d'une pale du ventilateur.

L'invention tire partie de l'insert pour augmenter encore la tenue mécanique du ventilateur et obtenir un meilleur ancrage de la matière plastique, c'est-à-dire une meilleure homogénéité du ventilateur et un meilleur accrochage de la matière plastique sur l'insert.

Les figures 6 à 8 illustrent un premier mode de réalisation selon l'invention particulièrement avantageux d'un ventilateur comportant un dessin de pales, du type de celui représenté sur la figure 2, c'est-à-dire d'un ventilateur à deux séries de pales, à savoir une première série de pales principales longues portant maintenant la référence 47 et une seconde série de pales courtes indiquées en 48, chacune disposée entre deux pales longues, comme cela est déjà représenté sur la figure 2. Le ventilateur à pales 47 et 48 présente donc les mêmes avantages que celui de la figure 2, tout en ayant une bonne tenue mécanique

La particularité du mode de réalisation de l'invention selon les figures 6 à 8 réside dans le fait que les pales courtes ne sont pas obtenues par surmoulage, mais font partie de l'insert métallique désigné maintenant par la référence 50.

La figure 7 illustre l'insert qui se présentant sous forme d'un flan en tôle portant à sa périphérie des portions découpées 48' qui deviennent, après leur pliage hors du plan de la partie principale formant la partie de flasque du ventilateur portant la référence 51, les pales courtes 48, comme on le voit sur la figure 8. L'insert, après le repliage autour d'un angle de par exemple 90° constitue lui-même déjà un ventilateur à pales courtes. Bien entendu, l'angle pourrait être différent de 90° comme par exemple pour un ventilateur hélico-centrifuge. On constate que lors de la transformation de l'insert plane selon la figure 7 dans l'insert ventilateur représenté sur la figure 8, les pales 48 ont été renforcées par des nervures 54 favorisant un meilleur accrochage de la matière plastique sur l'insert. Il est à noter que les pales 48 sont réparties autour de la partie de flasque 50 d'une façon irrégulière ; les pales étant plus rapprochées à droite sur les figures 6 et 8 que sur le côté gauche. Pour compléter la description de l'insert, on note en 56 des emplacements circulaires prévus pour la fixation du ventilateur sur le rotor. Ces emplacements 56 sont avantageusement du type des déformations locales 43 de la figure 4. On constate également que l'insert présente deux évidements diamétralement opposés pour le passage des liaisons filaires entre le bobinage 9 et les bagues du collecteur 6 de la figure 1.

C'est en surmoulant de la matière plastique sur l'insert, tel que représenté sur la figure 7, que l'on réalise le ventilateur illustré sur la figure 6, avec les pales principales longues 47 qui sont donc en matière plastique. Sur la figure 6 on reconnaît en 58 la ligne de contour extérieur de l'insert métallique de la figure 8. Dans l'ensemble du ventilateur, l'insert métallique est à nu dans chaque zone 60 autour d'un endroit de fixation 56. Ainsi l'insert peut être fixé, par exemple par soudage sur le rotor. On appréciera que la liaison filaire précitée entre le collecteur 6 et le bobinage 9 est bien bloquée car les évidements diamétralement opposés de la figure 7 deviennent après surmoulage des évidemment borgnes, dont le fond est fermé par la matière plastique en sorte que les fils sont intercalés entre la matière plastique et la face de la roue 8b.

La figure 9 est une vue partielle d'une autre version de réalisation du ventilateur de la figure 8 dont la particularité réside dans le fait de faire davantage d'économies en matière plastique. En effet, dans le cas de la figure 9, les pales secondaires courtes 48 sont complètement dégagées de la matière plastique, comme on le voit dans la partie désignée par la référence 63, qui est le contour du plastique.

Dans ces figures 8 et 9 on obtient un bon ancrage de la matière plastique du fait que l'insert présente des portions découpées 48 entre lesquelles s'incrustre la matière plastique. Bien entendu, comme à la figure 13, on peut doter l'insert d'évidements.

La figure 10 montre que le principe de la fabrication d'un ventilateur, selon l'invention, permet d'obtenir d'autres types de ventilateurs tels le ventilateur axial représenté sur cette figure présentant une partie centrale en forme de flasque troué centralement et portant à sa périphérie externe une partie cylindrique 67. Des pales 69 s'étendent en saillie radiale par rapport à la partie cylindrique 67 en étant au moins portées en partie par la partie 67.

Dans ce cas, au moins la partie centrale de flasque 65 et au moins une partie des pales 69 est en métal et appartient à l'insert, comme décrit par exemple à la figure 11, le restant avec la partie cylindrique 67 et la partie restante des pales 69 étant surmoulée. Dans cette figure on voit l'une des encoches pour passage de la liaison filaire précitée.

L'insert, comme à la figure 3, s'étend sur l'étendue complète de la partie de flasque du ventilateur.

La figure 11 montre un autre type de ventilateur axial qui se distingue de celui représenté sur la figure 10 par l'absence de la partie cylindrique 67 ; les pales 69 étant supportées chacune par une partie de support radialement interne 70 formée sur la zone périphérique radialement externe du flasque 65. Comme dans le cas de la figure 10, au moins la partie centrale de flasque est en métal, au moins une partie d'au moins une pale est en métal, par exemple la partie de support 70, et appartient à l'insert; le restant étant surmoulé. On notera dans cette figure 11 la présence de deux déformations diamétralement opposées (non référencées) en forme de gouttière pour le passage de la liaison filaire entre le bobinage 9 et les bagues du collecteur 6 de la figure 1. Les pales 69 pénètrent entre deux dents de la roue polaire représentée partiellement et correspondant à la roue polaire 8b de la figure 1. Cette disposition est rendue possible grâce à l'invention.

Avantageusement les parties 70 sont obtenues par pliage en sorte que ces parties sont intérieurement creuses ce qui favorise l'accrochage et donc l'ancrage de la matière plastique des pales 69.

Bien entendu de multiples modifications peuvent être apportées aux modes de réalisation représentés qui n'ont été donnés qu'à titre d'exemple. Ainsi les pales peuvent être dégagées ou être au moins en partie recouvertes de la matière plastique. L'insert métallique peut être fixé sur le rotor non seulement par soudage, mais par tout autre moyen approprié, par exemple par rivetage, filetage, frettage sur l'arbre, par des vis ou analogues.

A la différence du mode de réalisation selon les figures 6 à 8 où l'insert porte déjà une des deux séries de pales, à savoir les pales courtes, il est possible d'utiliser des inserts avec seulement une pale ou seulement une partie d'une pale ou de plusieurs pales ou des pales d'une série de pales.

Ainsi selon la surface de tôle de l'insert disponible pour le pliage des pales on peut réaliser toute sorte de combinaison entre les pales réalisées en tôle pliée avec les pales réalisées par surmoulage plastique. Par exemple, l'insert métallique peut porter des pales longues uniquement ou des pales courtes uniquement ou encore, une combinaison des deux. Ces pales bien évidemment peuvent être disposées de façon irrégulière. Ainsi l'insert peut être configuré en sorte qu'il ne porte qu'une pale longue ou courte par exemple.

Dans le cas du ventilateur axial selon la figure 10, la partie annulaire formant le rebord cylindrique peut aussi faire partie de l'insert métallique, au moins en partie. On pourrait aussi en plus prévoir sur l'insert au moins une amorce des pales, le restant de celles-ci sera alors réalisé par surmoulage. Bien entendu l'invention permet la réalisation de tout autre type de ventilateur, en plus des ventilateurs centrifuges et axiaux, tels que des ventilateurs centripètes, axialo-centrifuges ou axial-centripètes.

Il est à noter que l'invention apporte une solution efficace au problème que posent les ventilateurs devant être utilisés dans des alternateurs tournants d'un fort débit électrique, avec cependant la contrainte de ne pas augmenter le volume. La solution de réaliser les ventilateurs uniquement par moulage en matière plastique présente l'inconvénient d'un procédé de fabrication coûteux, et que les ventilateurs ainsi obtenus ne présentent pas la tenue mécanique souhaitée. Concernant le procédé de fabrication des ventilateurs en tôle pliée, qui serait approprié des points de vue du coût et de la tenue mécanique, il ne permet pas de réaliser la configuration de pales pouvant assurer un rendement de refroidissement nécessaire, c'est-à-dire de deux séries de pales conformément aux figures 2, 5 et 6.

Il ressort de ce qui précède que l'invention, notamment dans son mode de réalisation qui utilise un insert métallique déjà en forme d'un ventilateur ou avec au moins une pale, permet la réalisation de ventilateurs ayant des configurations de pales complexes leur conférant un pouvoir de refroidissement accru, à un coût de revient relativement faible tout en ayant une bonne tenue mécanique.

Pour des ventilateurs ayant une seule série de pales, mais qui sont très rapprochées et ainsi en grand nombre, ou des pales de forme longue ou compliquée, et qui du fait ne peuvent pas être réalisées par pliage, une partie du ventilateur peut alors être faite en tôle et une autre en plastique.

Bien entendu le ventilateur selon l'invention peut se monter dans un alternateur réversible, appelé alterno-démarreur, pouvant fonctionner également en mode moteur électrique, notamment pour démarrer le moteur thermique du véhicule automobile comme décrit dans le document WO 01/69762. En variante le ventilateur peut se monter dans un alternateur comportant un rotor à pôles saillants comme décrit dans le document WO 02/054566. L'alternateur peut également être refroidi par eau et être équipé de ventilateur axiaux du type de la figure 11.

Les bobinages du stator peuvent comporter de manière précitée des éléments conducteurs en forme d'épingles globalement en forme de U et à section avantageusement rectangulaire comme décrit dans le document WO 02/50976. Le ventilateur de l'invention permet de bien refroidir la tête des épingles car il peut avoir la forme voulue. L'alternateur peut ne comporter qu'un ventilateur arrière grâce à la puissance du ventilateur selon l'invention.

## Revendications

1. Ventilateur, pour alternateur doté d'un rotor, destiné à être solidarisé en rotation au rotor de l'alternateur, du type comprenant une partie formant flasque et une pluralité de pales de ventilateur s'étendant à partir de ce dernier, le ventilateur étant réalisé par moulage d'un matériau plastique sur un insert, qui constitue la partie du flasque du ventilateur, destinée à assurer sa fixation sur le rotor, dans lequel l'insert (38, 50, 65) constitue une armature apte à supporter les contraintes mécaniques produites lors de la rotation du ventilateur, **caractérisé en ce que** l'insert (50, 65) comporte au moins une partie d'une pale (48, 69) du ventilateur en sorte d'augmenter la tenue mécanique du ventilateur et d'obtenir un meilleur accrochage de la matière plastique.

2. Ventilateur selon la revendication 1, **caractérisé en ce qu'**il comporte deux séries de pales, à savoir une première série de pales principales (47) plus longues qu'une deuxième série de pales secondaires (48), dont au moins une est disposée entre deux pales principales (29, 47) et en que les pales secondaires (48) font partie au moins partiellement de l'insert (50).

3. Ventilateur selon la revendication 1, **caractérisé en ce qu'**il comporte deux séries de pales, à savoir une première série de pales principales (47) plus longues qu'une deuxième série de pales secondaires (48), dont au moins une est disposée entre deux pales principales (29, 47) et **en ce que** les pales principales (29,47) font partie au moins partiellement de l'insert (50).

4. Ventilateur selon l'une quelconque des revendications 1 à 3, **caractérisé en ce qu'**il comporte deux séries de pales, à savoir une première série de pales principales (47) plus longues qu'une deuxième série de pales secondaires (48), dont au moins une est disposée entre deux pales principales (29, 47) et **en ce que** l'insert (50) est réalisé en tôle pliée sous forme d'un ventilateur comportant au moins une pale secondaire (48) ou principale (29,47).

5. Ventilateur selon l'une quelconque des revendications 1 à 4, **caractérisé en ce que** les pales (29, 31, 47, 48, 69) ou les parties des pales qui ne font pas partie de l'insert sont obtenues par surmoulage d'une matière plastique sur l'insert.

6. Ventilateur selon la revendication 5 prise en combinaison avec la revendication 2, **caractérisé en ce que** les pales (29, 31, 47, 48, 69) surmoulées en plastique comportent au moins partiellement au moins une pale secondaire (48) localisée entre deux pales principales (29,47).

7. Ventilateur selon l'une quelconque des revendications 1 à 6, **caractérisé en ce que** les surfaces de l'insert sont au moins partiellement recouvertes de la matière plastique.

8. Ventilateur selon la revendication 7 prise en combinaison avec la revendication 2, **caractérisé en ce que** les pales secondaires (31, 48) sont au moins en partie recouvertes de matière plastique.

9. Ventilateur selon l'une quelconque des revendications 1 à 8, **caractérisé en ce qu'**au moins les parties (39) de l'insert, servant à la fixation du ventilateur sur son support, sont dégagées de matière plastique.

10. Ventilateur selon l'une quelconque des revendications 1 à 9, **caractérisé en ce qu'**il est un ventilateur axial comportant une partie de flasque (65) portant des pales (69), **en ce que** l'insert s'étend au moins sur l'étendu du flasque (65) et **en ce qu'**au moins une partie (70) d'au moins une pale (69) fait partie de l'insert.

11. Ventilateur selon la revendication 10, **caractérisé en ce qu'**il est un ventilateur axial comportant une partie de flasque (65), une partie cylindrique (67), et des pales (69) fixée sur la face extérieure de la partie cylindrique (67), **en ce que** l'insert s'étend au moins sur l'étendu du flasque (65) et **en ce qu'**au moins une partie de la partie cylindrique (67) fait partie de l'insert.

## Claims

1. A fan for an alternator having a rotor, the fan being adapted to be coupled in rotation to the alternator rotor and being of the type comprising a wheel part and a plurality of fan blades extending from the latter, the fan being moulded in a plastics material on an insert, which constitutes the wheel part of the rotor and which is adapted for fastening the fan on the rotor, wherein the insert (38, 50, 65) constitutes an armature adapted to withstand mechanical stresses produced during rotation of the fan, **characterised in that** the insert (50, 65) includes at least a portion of a blade (48, 69) of the fan, whereby to increase the mechanical strength of the fan and obtain improved adhesion of the plastics material.

2. A fan according to Claim 1, **characterised in that** it has two sets of blades, namely a first set consisting of main blades (47), longer than a second set which consists of secondary blades (48) whereof at least one is disposed between the main blades (29,47), and **in that** the secondary blades (48) are at least partially included in the insert (50).

3. A fan according to Claim 1, **characterised in that** it has two sets of blades, namely a first set consisting of main blades (47), longer than a second set which consists of secondary blades (48) whereof at least one is disposed between the main blades (29, 47), and **in that** the main blades (29, 47) are at least partially included in the insert (50).

4. A fan according to any one of Claims 1 to 3, **characterised in that** it has two sets of blades, namely a first set consisting of main blades (47), longer than a second set which consists of secondary blades (48) whereof at least one is disposed between the main blades (29, 47), and **in that** the insert (50) is made from metal plate bent into the form of a fan having at least one secondary blade (48) or main blade (29, 47).

5. A fan according to any one of Claims 1 to 4, **characterised in that** the blades (29, 31, 47, 48, 69), or those portions of the blades that are not part of the insert, are formed by *in situ* moulding of the plastics material on the insert.

6. A fan according to Claim 5 taken in combination with Claim 2, **characterised in that** the blades (29, 31, 47, 48, 69) moulded in plastics material comprise, at least partially, at least one secondary blade (48) located between two main blades (29,47).

7. A fan according to any one of Claims 1 to 6, **characterised in that** the faces of the insert are at least partly covered with plastics material.

8. A fan according to Claim 7 taken in combination with Claim 2, **characterised in that** the secondary blades (31, 48) are at least partly covered with plastics material.

9. A fan according to any one of Claims 1 to 8, **characterised in that** at least those parts (39) of the insert that serve for fastening the fan on its support are free of plastics material.

10. A fan according to any one of Claims 1 to 9, **characterised in that** it is an axial fan comprising a plate portion (65) which carries blades (69), **in that** the insert extends over at least the whole of the plate portion (65), and **in that** at least a portion (70) of at least one blade (69) is included in the insert.

11. A fan according to Claim 10. **characterised in that** it is an axial fan comprising a plate portion (65), a cylindrical portion (67), and blades (69) which are fixed on the outer face of the cylindrical portion (67), **in that** the insert extends over at least the whole of the plate portion (65), and **in that** at least a part of the cylindrical portion (67) is included in the insert.

## Patentansprüche

1. Lüfter für einen Wechselstromgenerator mit einem Läufer, der dazu bestimmt ist, drehfest mit dem Läufer des Wechselstromgenerators verbunden zu werden, umfassend einen als Flansch dienenden Teil und eine Mehrzahl von Lüfterflügeln, die sich von letzterem aus erstrecken, wobei der Lüfter als Formteil aus Kunststoff auf einem Einsatz ausgeführt ist, der den Teil des Flansches des Lüfters bildet, der dazu bestimmt ist, seine Befestigung am Läufer zu übemehmen, wobei der Einsatz (38, 50, 65) eine Bewehrung bildet, die in der Lage ist, die bei der Drehung des Lüfters erzeugten mechanischen Beanspruchungen auszuhalten, **dadurch gekennzeichnet , dass** der Einsatz (50, 65) wenigstens einen Teil eines Flügels (48, 69) des Lüfters umfasst, um die mechanische Festigkeit des Lüfters zu erhöhen und eine bessere Anfügung des Kunststoffes zu erzielen.

2. Lüfter nach Anspruch 1, **dadurch gekennzeichnet , dass** er zwei Flügelreihen umfasst, und zwar eine erste Reihe von Hauptflügeln (47), die länger sind als eine zweite Reihe von Sekundärflügeln (48), von denen wenigstens einer zwischen zwei Hauptflügeln (29, 47) angeordnet ist, wobei die Sekundärflügel (48) wenigstens teilweise zum Einsatz (50) gehören.

3. Lüfter nach Anspruch 1, **dadurch gekennzeichnet** , d a s s er zwei Flügelreihen umfasst, und zwar eine erste Reihe von Hauptflügeln (47), die länger sind als eine zweite Reihe von Sekundärflügeln (48), von denen wenigstens einer zwischen zwei Hauptflügeln (29, 47) angeordnet ist, wobei die Hauptflügel (29, 47) wenigstens teilweise zum Einsatz (50) gehören.

4. Lüfter nach einem der Ansprüche 1 bis 3, **dadurch gekennzeichnet , dass** er zwei Flügelreihen umfasst, und zwar eine erste Reihe von Hauptflügeln (47), die länger sind als eine zweite Reihe von Sekundärflügeln (48), von denen wenigstens einer zwischen zwei Hauptflügeln (29, 47) angeordnet ist, und dass der Einsatz (50) aus gebogenem Blech in Form eines Lüfters ausgeführt ist, der wenigstens einen Sekundärflügel (48) oder Hauptflügel (29, 47) umfasst.

5. Lüfter nach einem der Ansprüche 1 bis 4, **dadurch gekennzeichnet , dass** die Flügel (29, 31, 47, 48, 69) bzw. die Teile der Flügel, die nicht zum Einsatz gehören, durch Aufformen eines Kunststoffes auf dem Einsatz hergestellt sind.

6. Lüfter nach Anspruch 5 in Kombination mit Anspruch 2, **dadurch gekennzeichnet , dass** die aufgeformten Flügel (29, 31, 47, 48, 69) aus Kunststoff zumindest teilweise wenigstens einen Sekundärflügel (48) umfassen, der zwischen zwei Hauptflügeln (29, 47) angeordnet ist.

7. Lüfter nach einem der Ansprüche 1 bis 6, **dadurch gekennzeichnet , dass** die Oberflächen des Einsatzes wenigstens teilweise mit Kunststoff bedeckt sind.

8. Lüfter nach Anspruch 7 in Kombination mit Anspruch 2, **dadurch gekennzeichnet , dass** die Sekundärflügel (31, 48) wenigstens teilweise mit Kunststoff bedeckt sind.

9. Lüfter nach einem der Ansprüche 1 bis 8, **dadurch gekennzeichnet , dass** wenigstens die Teile (39) des Einsatzes, die zur Befestigung des Lüfters an seinem Träger dienen, nicht mit Kunststoff bedeckt sind.

10. Lüfter nach einem der Ansprüche 1 bis 9, **dadurch gekennzeichnet, dass** er ein Axiallüfter mit einem Flügel (69) tragenden Flanschteil (65) ist, dass sich der Einsatz wenigstens auf der Ausdehnung des Flansches (65) erstreckt und dass zumindest ein Teil (70) wenigstens eines Flügels (69) zum Einsatz gehört.

11. Lüfter nach Anspruch 10, **dadurch gekennzeichnet , dass** er ein Axiallüfter ist, der einen Flanschteil (65), einen zylindrischen Teil (67) und Flügel (69) umfasst, die an der Außenfläche des zylindrischen Teils (67) befestigt sind, dass sich der Einsatz zumindest auf der Ausdehnung des Flansches (65) erstreckt und dass wenigstens ein Teil des zylindrischen Teils (67) zum Einsatz gehört.
